# NEW EUROPEAN PATENT SPECIFICATION

(11) **EP 2 298 124 B2**
(45) Date of publication and mention of the opposition decision: **26.08.2015**
(45) Mention of the grant of the patent: 04.07.2012
(21) Application number: 10194194.6
(22) Date of filing: 17.09.2003
(51) Int. Cl.: A46B 5/02, A46B 9/04

(54) **Toothbrush with gripping area**
Zahnbürste mit Griffbereich
Brosse à dents avec zone de préhension

(30) Priority: 20.09.2002 US 412290 P
(43) Date of publication of application: 23.03.2011
(62) Divisional of application: 03749772.4
(73) Proprietor: Colgate-Palmolive Company, New York NY 10022-7499 (US)
(72) Inventor: Hohlbein, Douglas, J., Hopewell, New Jersey 08525 (US); Rooney, Michael, Charles, Millburn, NJ 07041 (US)
(74) Representative: Jenkins, Peter David

(56) References cited:
- WO-A1-96/15696
- WO-A1-97/16995
- WO-A1-03/055351
- WO-A2-00/76369
- US-A- 5 604 951
- US-A- 5 735 011

## Description

### Background of the invention

Various attempts have been made to provide the handle of a toothbrush with specialized gripping areas. Typical toothbrushes utilize a somewhat thin layer of elastomer on the surface of a rigid thermoplastic frame for a non-slip surface. U.S. Patent Nos. 2,263,885, 5,398,369, 5,781,958, 5,875,510, 6,108,869 (and its PCT counterpart WO97/29663) 6,179,503, 6,298,516 and 6,332,233, US published application 2002/0138931A1, as well as WO00/64306 show various practices where portions of the handle are recessed or otherwise accommodate pressure pads, non-slip structure, etc. in the gripping area. U.S. design patents D368,163, D416,685 and D446,021 also appear to illustrate toothbrushes having some form of special gripping structure on the surface of the handle. U.S. Patent No. 4,339,482 discloses a variation where the non-slip surface is provided on opposite sides of an insert which extends completely through a hole in the handle. The insert is stated to be fabricated from an elastomeric material and preferably from a thermoplastic injection moldable material. Alternatively, where the handle is made pliable the insert may be fabricated from a material which is not readily compressed such as metals or hard plastics.

US 5,735,011 discloses a toothbrush comprising a plurality of plaque removing members formed from a mixture of a relatively soft elastomeric material and particles of an abrasive material project outwardly from a support portion of the toothbrush and each plaque removing member is surrounded by a plurality of tufts of bristles formed from conventional materials.

### Summary of the Invention

The present invention provides a toothbrush according to claim 1.

### The Drawings:

Figure 1 is a front elevational view of a manual toothbrush having a soft resilient gripping area in accordance with this invention;
Figure 2 is a longitudinal cross-sectional view in elevation of one form of yieldable material forming the gripping area of the toothbrush of Figure 1;
Figures 3-6 are views similar to Figure 2 of alternate forms of gripping area structure;
Figure 7 is a front elevational view of yet another gripping area structure in accordance with this invention;
Figures 8-10 are views similar to Figures 2-6 of still yet further gripping area structures in accordance with this invention;
Figure 11 is a front elevational view of a further toothbrush in accordance with this invention;
Figures 12-13 are side and rear elevational views of the toothbrush shown in Figure 11;
Figure 14 is a cross-sectional view taken through Figure 11 along the line 14-14;
Figure 15 is a cross-sectional view taken through Figure 13 along the line 15-15;
Figure 16 is a fragmental elevational view partly broken away of a portion of the handle shown in Figures 11-13; and
Figure 17 is a front elevational view of a power driven toothbrush incorporating the gripping area of this invention.

### Detailed Description

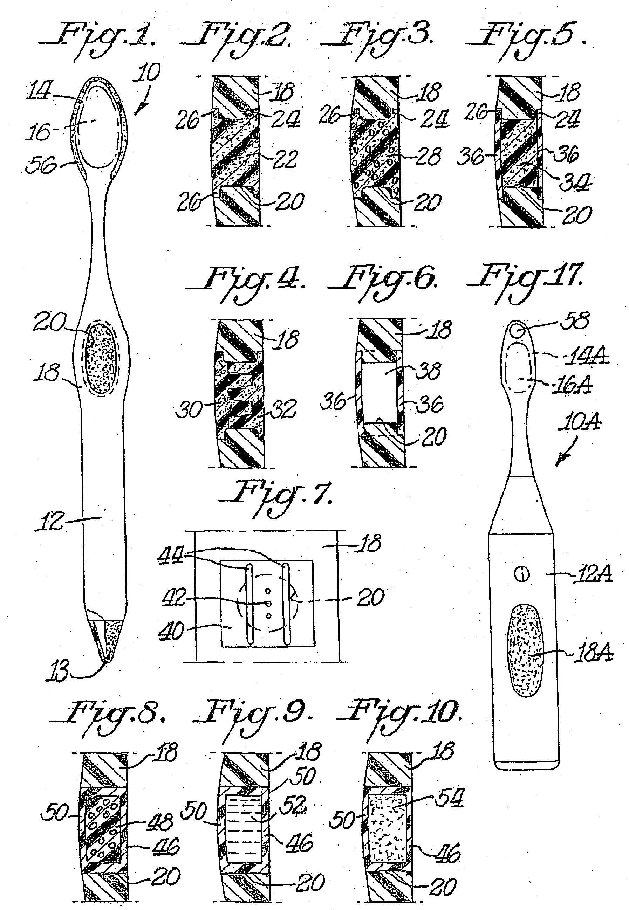

Figure 1 illustrates a toothbrush 10 in accordance with this invention. As shown therein the toothbrush 10 could be of any generally known construction which includes a handle 12 and a head 14. Head 14 would have an outer surface from which a pattern of cleaning elements 16 (shown schematically in phantom) would extend. Handle 12 would have a gripping area or section 18 which in normal use would be held with the fingers wrapped around the handle wherein the thumb is on one side of the handle and the index finger and other fingers are on the opposite side of the handle. One of these gripping surfaces would be on the same side of the toothbrush as is the outer surface of head 14 from which the cleaning elements 16 extend. The other gripping surface would be on the opposite side of the handle.

Handle 12 would be generally made from conventional hard plastic materials such as polypropylene or other rigid or semi-rigid plastics. In accordance with this invention the gripping section 18 of handle 14 would be wider than conventional stems or handles. As a result, there is sufficient width or a sufficient transverse dimension across handle 12 at gripping section 18 to permit the inclusion of a large through hole 20 in section 18. The entire handle 12 may be of wider than conventional construction or only the gripping area 18 may be of the wider construction. As shown in Figure 1 the through hole 20 occupies more than one-half of the transverse dimension across gripping section 18 of handle 12. To provide sufficient gripping area the through hole should occupy a substantial portion of the transverse dimension such as at least one-third or at least 40% of the transverse dimension.

In the broad practice of this invention the through hole 20 is filled with a yieldable material so as to provide a soft resilient gripping area. This thereby achieves a soft pliable feeling through the nature of the construction of the gripping section 18 when the toothbrush is being used. The large void or through hole 20 contains and preferably is completely filled with a yieldable material which provides a soft core than can take various forms, some of which are illustrated in Figures 2-16. The benefit of the large through hole 20 is twofold. The first is that the larger the mass, the more compression one will experience under normal gripping force. The second benefit is that the through hole 20 allows one to "feel" the compression from one side of the handle to the other as the compressive force drives the yieldable material toward the opposite surface. During brushing this allows the handle to "float" in one's hand as the mass shifts in relation to the forces applied against the teeth.

Where the invention is practiced by at least partially and preferably completely filling the through hole 20 with a soft yieldable material, the material is preferably a low durometer elastomer having shock absorbing qualities. A preferred softness would be a Shore A hardness of 30 or less. More preferred softnesses would be a Shore A of 13 or less, 10-13, 8 or less, 5 or less and 2 or less. Any suitable soft elastomer may be used which provides these characteristics.

In the embodiment shown in Figure 2 the through hole 20 is filled with a single soft durometer elastomeric material 22. The rigid portion of gripping area 18 may have recesses forming shoulders 24 to prevent the soft elastomer material 22 from being dislodged. Thus, when the soft elastomer material 22 is in place, the material has flanges 26 which are disposed against shoulders 24.

Figure 3 shows a variation wherein the yieldable material is of any suitable foam core 28. As with the embodiment in Figure 2 the rigid stem 18 would have recesses forming shoulders 24 which would be in contact with flanges 26.

Figure 4 shows a variation of the invention wherein the core which fills through hole 20 would be made of two shots of the same material which could be in two clear tints or colors to provide visual interest. As illustrated the two shots of material 30,32 are intermeshed. This version of the invention may also be practiced where two different materials are used to provide different softness characteristics on each of the two opposite gripping surfaces.

Figure 5 illustrates a practice of the invention wherein the soft yieldable material 34 fills the void or through hole 20 and is maintained in place by the provision of a thin skin 36 on each of the outer gripping surfaces in gripping area 18. The skins 36 could be located in the recesses of gripping area 18 at shoulders 24. If desired, the skins 36 could be made of a more durable material than the core material 34 which fills the through hole 20. The thin skins could be made of a resilient material to permit the skins to allow the user to press into the through hole to allow the user to "feel" the compression from one side of the handle to the other as the compressive force drives the material toward the opposite surface. The material would then return to its normal position when the force is no longer being applied. The skins 36 could be secured to the rigid stem 18 in any suitable manner such as by ultrasonic welding.

Figure 6 shows a variation of the invention wherein the yieldable material in the through hole 20 is an air pocket 38. By having the outer skins 36,36 completely sealed the through hole 20 an air lock is created. The air lock shown in Figure 6 creates an air mattress or bubble within the hollow core.

In a variation of the air pocket shown in Figure 6, Figure 7 shows the skins 40 to have perforations or holes 42 which permits air to flow into and out of the air pocket. Figure 7 also illustrates the outer skins 40 being reinforced by adequate structure such as sufficient thickness or local ribs or truss sections 44 to provide grip resilience.

Figure 8 shows a practice of the invention wherein the through hole 20 contains a prefilled capsule 46 which is filled or contains a yieldable material. In the embodiment shown in Figure 8 the yieldable material is a suitable gel 48. The exposed portions of the capsule 48 would function as outer skins 50,50.

Figure 9 shows a variation of the invention shown in Figure 8 where the capsule 46 is filled with a suitable liquid 52.

Figure 10 shows still another variation of the embodiment shown in Figures 8-9 wherein the yieldable material is a particulate material 54 such as granules of sand, plastic, etc.

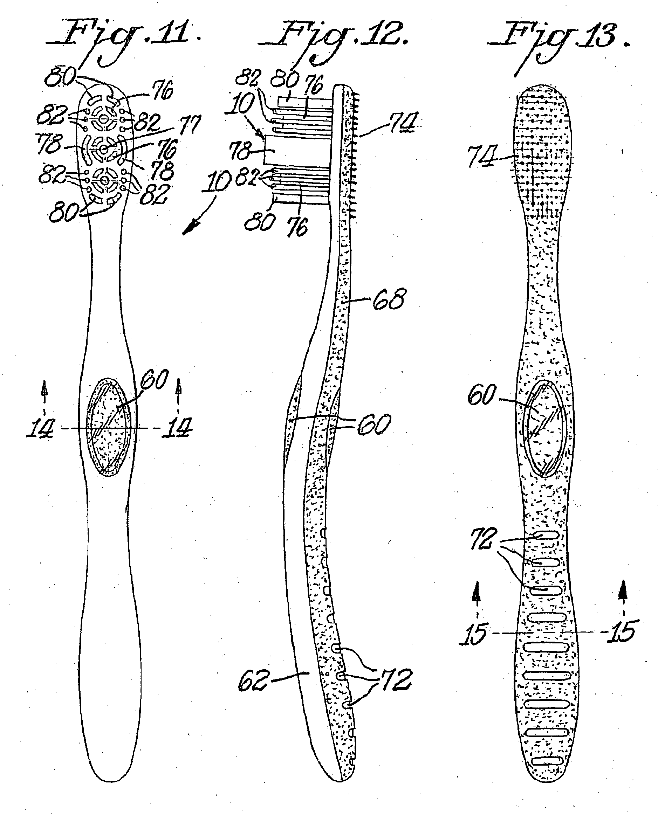

Figure 1 also illustrates a further feature of the invention wherein the head 14 is provided with peripheral bumpers 56 made of a yieldable material similar, for example, to the materials 22, 28 and 34 used in the gripping area. The yieldable material 56 is advantageous in that it would provide soft contact areas on the portions of head 14 which might contact the gums. The provision of bumper material 56, such as on the head 14 or 14A of Figure 17, is desirable since it softens the impact on the gums when there is any contact of the head against the gums. The opposite end 13 of toothbrush 10, at the remote tip of handle 12 may be of yieldable material which is generally pointed to function as a toothpick or gum massager. As later described with respect to Figures 12-13 the head 14 could include tongue cleaning texture.

In the various practices of this invention the through hole 20 could be filled partially or completely with the yieldable material in any suitable manner such as by being injected into the through hole or force fit into the through hole.

The first outer gripping surface and second outer gripping surface on opposite sides of the gripping section with the through hole located there between preferably have a contour which blends in or is a smooth continuation of the general contour of the gripping section 18 in the handle itself such as illustrated in the various figures. Alternatively, the outer gripping surfaces could bulge slightly or even be slightly recessed from the general contour of the surrounding gripping section.

One aspect of the present invention is the recognition of design trends in toothbrushes for incorporating elastomeric materials in handles and in all parts of the brush that are becoming softer and softer. As these materials are formulated to become softer they typically become less adherent to the materials used in the handles (such as polypropylene and other rigid and semi-rigid plastics). This becomes the limiting factor in various designs. In the embodiment illustrated in Figures 11-16 the invention deals with the utilization of a thin layer of harder elastomeric material that is molded between the base material made of rigid or semi-rigid plastic and the softer elastomer in the toothbrush handle wherein the softer elastomer could be utilized in the gripping area or other portions of the toothbrush. This would allow the use of two materials, namely, a hard material such as polypropylene and a very soft elastomer to be used that do not normally adhere to one another with sufficient strength and such materials could be used in the manufacturing of a handle due to the ability of both the base harder material and the softer elastomer to adhere to the intermediate thin layer of harder elastomer.

This aspect of the invention thus overcomes the problem of being able to use softer materials which typically do not adhere well to the rigid and semi-rigid materials used for structural support within the handles. This is accomplished by using a layer of elastomer molded over the rigid or semi-rigid plastic that has properties that allow it to adhere to these types of plastics. As the elastomer material for this layer also has properties that enable it to adhere to the softer elastomer, it enables the utilization of the two otherwise incompatible materials to be used in the same handle.

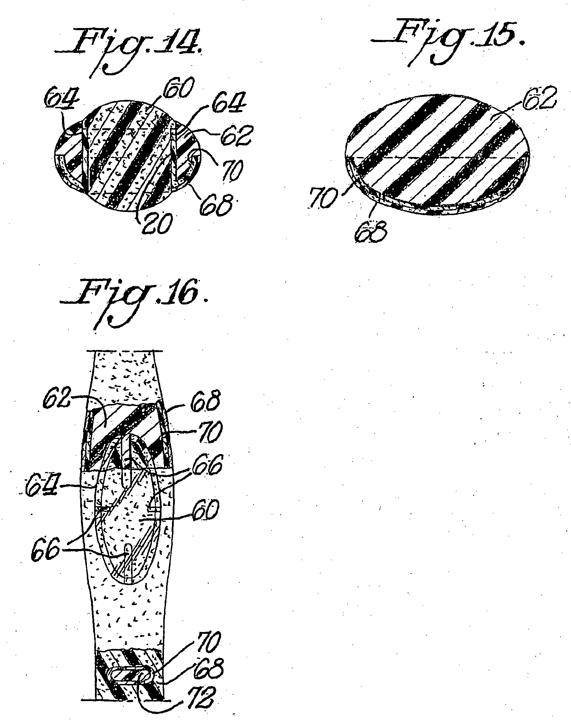

Figures 11-16 illustrate a toothbrush which relates to the above aspect of the invention. As shown therein the handle includes a through hole 20 which is filled with a soft elastomer material 60. See Figure 14. The soft elastomer material 60 would preferably have a very low hardness such as a Shore A of 8 or below. In order to secure the elastomer or yieldable material 60 to the hard handle material 62 which surrounds the through hole 20, a thin layer of elastomeric material 64 lines the inner wall of the through hole. Layer 64 is made of a higher durometer elastomer material which has the property of adhering to the hard material 62 such as a rigid polypropylene material. The hard durometer material 64, however, is also capable of adhering to its similar soft durometer material 60. Thus, the gripping area would be formed by first injecting the thin layer of higher durometer elastomer 64 into the through hole 20 to adhere to the hard material 62. Then, the very low durometer material 60 would be over molded onto the higher durometer elastomer layer 64.

As shown in Figure 16 if desired the high durometer material 64 could have inwardly directed projections 66 to increase the surface area against which the low durometer material 60 could be secured.

Any suitable elastomers may be used in accordance with this invention for materials 60 and 64. For example, an elastomer marketed by GLC Corporation under the name VERSAFLEX^{®} CL2003X which is a thermoplastic rubber compound is an extremely soft material which will not stick to polypropylene but would stick to higher durometer elastomers. Such elastomer would be suitable for yieldable elastomer 60. A higher durometer elastomer could be another product marketed by GLS Corporation under the trademark DYNAFLEX^{®} G2711-1000-00, which is a thermoplastic elastomer compound made with KRATON^{®} polymer. Such material will adhere to hard materials such as polypropylene and to soft elastomers. Such material would be suitable for elastomer 64. It is to be understood that reference to these specific materials is for exemplary purposes and is not intended to be limiting since any suitable elastomers could be used within the spirit of this invention.

As shown in Figures 12 and 14 the gripping surface of the low durometer elastomer yieldable material 60 extends outwardly from the general smooth profile of the handle. The toothbrush is otherwise in the shape of a gentle S.

In this general practice of the invention of Figures 11-16 the gripping surface is a very low hardness elastomeric material 60 having a Shore A hardness, for example, of 8 or less. The very low durometer elastomer material 60 is secured to the rigid or semi-rigid material 62 generally used in the handle, such as polypropylene, by means of an intermediate layer 64 which is sufficiently hard to adhere to the polypropylene material 62 and which is compatible with the low durometer elastomer 60 so that it will also adhere to the low durometer elastomer 60. The intermediate layer 64 could be of any suitable hardness which is harder than the hardness of the low durometer elastomer. Such higher durometer elastomer material could have a Shore A hardness of greater than 8 and preferably greater than 30.

In the various embodiments, the grip surface 18 and the material filling through hole 20 may be transparent, may be tinted or may be of various colors to correspond to or contrast with the adjacent portion of the handle 12.

The concept of adhering a very low durometer elastomer material to a hard material such as polypropylene could also be utilized for adhering such very low durometer material to other parts of the toothbrush. Figures 12-13, for example, illustrate the back of the toothbrush to include a layer 68 of soft material. If desired the soft layer 68 could be adhered to the harder handle material 62 by first applying an intermediate layer 70 against the outer surface of the hard material 62. See Figure 15. The very low durometer material 68 could then be overmolded on the inner layer 70. This could be done in any portions of the toothbrush including the handle and the head. To facilitate the securement of the outer soft layer 68 to the hard handle material 62 the hard handle material could include a series of projections 72, which are illustrated in Figures 13 and 16, as being generally parallel to each other and extending across the width of the back side of the toothbrush at generally uniform intervals. The length of each projection 72 could gradually increase in accordance with the location of the handle of each projection 72, thus the longest projections would be at the widest portion of the handle.

Figures 12-13 illustrate a further feature of this invention wherein the back of the head has an elastomeric tongue cleaning or scraping texture 74 creating a generally rough surface. The tongue cleaning surface 74 alone or in combination with the pointed tip 13 (Figure 1) which can be a toothpick or a gum massager, makes the toothbrush quite versatile.

Figure 11 shows a particularly desirable arrangement which includes a plurality of spaced aligned prophy cups 76 centrally located along the longitudinal axis of the brush head. Each prophy cup is in the form of four outwardly extending elastomeric elements which are coarcuate so as to form an interrupted cup-like cylinder. Within each prophy cup 76 there is a tuft of bristles 77. The outer ends of the bristles 77 taper inwardly from the circumference toward the center of the tufts of bristles so that each tuft of bristles 77 is also cup shaped.

As shown in Figure 11 an elongated elastomeric cleaning element 78 is provided on each side of the central prophy cup. A pair of elongated elastomeric elements 80 is provided outwardly of each end prophy cup. Tufts of bristles 82 are provided between the various elastomeric cleaning elements 70 and 80 as also illustrated in Figure 11.

The various cleaning elements illustrated in Figures 11-12 preferably are of different lengths. For example, the central peripheral elastomeric elements 78 comprise the longest cleaning elements and are longer than the end elastomeric cleaning elements 80. The tufts of bristles 82 are of a length between the lengths of the elastomeric cleaning elements 78 and 80. The prophy cups 76 extend a shorter distance from the head than the elastomeric cleaning elements 80, while the tufts of bristles 77 within the prophy cups extend a shorter distance than the prophy cups. The tufts of bristles 82 along side the endmost prophy cups 76 may extend a distance generally equal to the diameter of the prophy cups 76. The intermediate elastomeric cleaning elements 78 are of arcuate shape and extend a distance generally equal to or slightly larger than the diameter of the central prophy cup 76.

The tufts of bristles 82 for the prophy cup 76 which is nearest to the handle extend over a distance which is generally equal to the diameter of its prophy cup 76. These tufts of bristles need not be located precisely in line with their respective prophy cups. The end elastomeric cleaning elements 80 are preferably of a shape which tapers from its smallest distance at the perimeter of the head 14 toward the longitudinal center line of the head. The intermediate elastomeric cleaning element 78 however, are preferably of uniform thickness.

Figure 17 shows the practice of the invention wherein the toothbrush 10A is a power driven toothbrush having, for example, a movable section 58 on head 14A. As illustrated movable section 58 is located near the portion of the head 14A having the cleaning elements 16A. Movable section 56 would also be provided with outwardly extending cleaning elements (not shown). The handle 12A of power toothbrush 10A would generally include power structure such a batteries, a motor and a shaft within the hollow handle. The invention would be practiced by providing the gripping portion 18A of the hollow handle 12A with a solid section having a through hole for the yieldable material. Care would be taken so that the through hole could be created through handle 12A without interfering with the location of the power structure.

Any suitable type of power motion could be imparted to moving section 58. Examples of such power driven movement include 360° continuous rotation, oscillating rotation, linear longitudinal movement with regard to the longitudinal axis of the toothbrush, transverse longitudinal movement with regard to the longitudinal axis of the toothbrush and in and out movement generally perpendicular to the longitudinal axis of the toothbrush.

The invention thus provides a unique grip sensation on a toothbrush handle. Where a generally conventional toothbrush structure is used, such as in a manual toothbrush, the width of the frame of the handle is expanded to accommodate a large through hole in the grip area. The large through hole can then be filled completely or partially with a large mass of yieldable material such as soft durometer elastomer which can take a number of configurations. Alternatively, the yieldable material could be air where the through hole forms an air pocket completely or partially covered by outer skins. The outer skins may also be used in practices of the invention having the soft low durometer elastomer in the through hole or wherein the outer skins are part of a prefilled capsule.

It is to be understood that various features of specific embodiments may be used in other embodiments within the teachings of this invention.

## Claims

1. A toothbrush (10) comprising an elongated handle (12), a head (14) secured to one end of said handle (12), cleaning elements (16) mounted to said head (14) and extending outwardly from an outer surface of said head (14), wherein said cleaning elements comprise a plurality of spaced aligned prophy cups (76) centrally located along a longitudinal axis of the brush head, and a plurality of first tufts of bristles (82);
**characterised in that** the toothbrush further comprises a plurality of elongated elastomer cleaning elements (78,80) mounted along the periphery of said head, wherein the first tufts of bristles (82) are located between pairs of said elongated cleaning elements (78,80) along the periphery of said head (14), wherein each prophy cup (76) is in the form of four outwardly extending elastomeric elements which are coarcuate so as to form an interrupted cup-like cylinder, wherein the plurality of elongated elastomer cleaning elements (78,80) comprises a first elongated elastomeric cleaning element (78) respectively provided on each side of a central prophy cup of the prophy cups (76), wherein the plurality of elongated elastomer cleaning elements (78,80) comprises a pair of second elongated elastomeric elements (80) provided outwardly of each end prophy cup (76), wherein the first tufts of bristles (82) are provided between the elastomeric cleaning elements (78,80) and the toothbrush further comprises a second tuft of bristles (77) within each prophy cup (76), wherein the outer ends of the bristles of the second tufts (77) taper inwardly from the circumference toward the center of the second tufts of bristles (77) so that each second tuft of bristles (77) is cup-shaped.

2. The toothbrush (10) of claim 1, wherein the first elastomeric cleaning elements (78) are of arcuate shape and extend a distance generally equal to or slightly larger than the diameter of a central prophy cup of prophy cups (76).

3. The toothbrush (10) of claim 1 or claim 2, wherein the first elastomeric cleaning elements (78) are of uniform thickness.

4. The toothbrush (10) of any one of claims 1 to 3, wherein the first elongated elastomeric cleaning elements (78) comprise the longest elastomeric cleaning elements and are longer than the second elongated elastomeric elements (80).

5. The toothbrush (10) of any one of claims 1 to 4, wherein the second elastomeric cleaning elements (80) are of a shape which tapers from its smallest distance at the perimeter of the head toward the longitudinal center line of the head.

6. The toothbrush (10) of any one of claims 1 to 5, wherein the prophy cups (76) extend a shorter distance from the head than the second elastomeric cleaning elements (80).

7. The toothbrush (10) of any one of claims 1 to 6, wherein the first tufts of bristles (82) are of a length between the lengths of the first and second elastomeric cleaning elements (78,80).

8. The toothbrush (10) of any one of claims 1 to 7, wherein the second tufts of bristles (77) within the prophy cups (76) extend a shorter distance than the prophy cups (76).

9. The toothbrush (10) of any foregoing claim, wherein the first tufts of bristles (82) alongside the endmost prophy cups (76) extend a distance generally equal to the diameter of the prophy cups (76).

10. The toothbrush (10) of any foregoing claim, wherein the first tufts of bristles (82) alongside the prophy cup (76) which is nearest to the handle extend over a distance which is generally equal to the diameter of that prophy cup (76).

11. The toothbrush (10) of any foregoing claim, wherein a surface of said head remote from said outer surface having said cleaning elements is roughened to comprise a tongue cleaning surface (74).

12. The toothbrush (10) of any foregoing claim, including a yieldable material peripherally around said head to soften impact on the gums.

13. The toothbrush (10) of any foregoing claim, wherein said handle has a first outer surface on the same side of said toothbrush as said cleaning elements, said handle and said head having a second outer continuous surface on the opposite side of said toothbrush as said first outer surface, at least one portion of said second outer surface having an outer layer (68) made from a soft low hardness elastomer, a main portion of said handle and said head being made from a hard material (62) which is at least semi-rigid, an intermediate lining (70) disposed at said at least one portion adhered to said hard material (62), said lining (70) being made of an elastomer having a higher hardness than the hardness of said outer layer, said lining (70) being adhered to said hard material (62), and said outer layer being adhered to said lining (70).

14. The toothbrush (10) of claim 13, wherein said at least one portion of said toothbrush includes portions of said handle and said head.

15. The toothbrush (10) of claim 13, wherein said outer layer has a Shore A hardness of no greater than 8.

16. The toothbrush (10) of claim 13, wherein said outer layer has a roughened surface at said head to comprise a tongue scraper.

17. The toothbrush (10) of claim 13, wherein the tip of said handle remote from said head is made of a yieldable material which is generally pointed to comprise a toothpick or gum massager.

## Patentansprüche

1. Zahnbürste (10), die einen länglichen Griff (12), einen Kopf (14), der an einem Ende des Griffs (12) befestigt ist, und Reinigungselemente (16) aufweist, die an dem Kopf (14) montiert sind und sich von einer äußeren Oberfläche des Kopfes (14) nach außen erstrecken, wobei die Reinigungselemente eine Vielzahl von beabstandeten, ausgerichteten Prophylaxenäpfen (76), die zentral entlang einer Längsachse des Bürstenkopfes angeordnet sind, und eine Vielzahl von ersten Büscheln von Borsten (82) aufweisen,
**dadurch gekennzeichnet, dass** die Zahnbürste ferner eine Vielzahl von länglichen elastomeren Reinigungselementen (78, 80) aufweist, die entlang des Randes des Kopfes montiert sind, wobei die ersten Büschel von Borsten (82) zwischen Paaren der länglichen Reinigungselemente (78, 80) entlang des Randes des Kopfes (14) angeordnet sind, wobei jeder Prophylaxenapf (76) in der Form von vier sich nach außen erstreckenden elastomeren Elementen vorgesehen ist, die kogekrümmt sind, um einen unterbrochenen, napfartigen Zylinder zu bilden, wobei die Vielzahl von länglichen elastomeren Reinigungselementen (78, 80) jeweils ein erstes längliches elastomeres Reinigungselement (78) aufweist, das auf jeder Seite eines zentralen Prophylaxenapfes der Prophylaxenäpfe (76) vorgesehen ist, wobei die Vielzahl von länglichen elastomeren Reinigungselementen (78, 80) ein Paar von zweiten länglichen elastomeren Elementen (80) aufweist, die in Richtung nach außen von jedem End-Prophylaxenapf (76) vorgesehen sind, wobei die ersten Büschel von Borsten (82) zwischen den elastomeren Reinigungselementen (78, 80) vorgesehen sind und die Zahnbürste ferner ein zweites Büschel von Borsten (77) innerhalb jedes Prophylaxenapfes (76) aufweist, wobei die äußeren Enden der Borsten der zweiten Büschel (77) sich nach innen von dem Umfang in Richtung auf die Mitte der zweiten Büschel von Borsten (77) verjüngen, so dass jedes zweite Büschel von Borsten (77) napfförmig ist.

2. Zahnbürste (10) nach Anspruch 1, bei der die ersten elastomeren Reinigungselemente (78) von einer gebogenen Form sind und über eine Strecke verlaufen, die im Wesentlichen gleich wie oder etwas größer als der Durchmesser eines zentralen Prophylaxenapfes der Prophylaxenäpfe (76) ist.

3. Zahnbürste (10) nach Anspruch 1 oder Anspruch 2, bei der die ersten elastomeren Reinigungselemente (78) von gleichförmiger Dicke sind.

4. Zahnbürste (10) nach einem der Ansprüche 1 bis 3, bei der die ersten länglichen elastomeren Reinigungselemente (78) die längsten elastomeren Reinigungselemente aufweisen und länger als die zweiten länglichen elastomeren Elemente (80) sind.

5. Zahnbürste (10) nach einem der Ansprüche 1 bis 4, bei der die zweiten elastomeren Reinigungselemente (80) von einer Form sind, die sich von ihrer kleinsten Entfernung an dem Rand des Kopfes in Richtung auf die Längsmittellinie des Kopfes verjüngt.

6. Zahnbürste (10) nach einem der Ansprüche 1 bis 5, bei der die Prophylaxenäpfe (76) sich um eine kürzere Strecke von dem Kopf erstrecken als die zweiten elastomeren Reinigungselemente (80).

7. Zahnbürste (10) nach einem der Ansprüche 1 bis 6, bei der die ersten Büschel von Borsten (82) von einer Länge zwischen den Längen der ersten und zweiten elastomeren Reinigungselemente (78, 80) sind.

8. Zahnbürste (10) nach einem der Ansprüche 1 bis 7, bei der die zweiten Büschel von Borsten (77) innerhalb jedes Prophylaxenapfes (76) sich um eine kürzere Strecke als die Prophylaxenäpfe (76) erstrecken.

9. Zahnbürste (10) nach einem der vorhergehenden Ansprüche, bei der die ersten Büschel von Borsten (82) an der Seite der äußersten Prophylaxenäpfe (76) sich um eine Strecke erstrecken, die im Wesentlichen gleich dem Durchmesser der Prophylaxenäpfe (76) ist.

10. Zahnbürste (10) nach einem der vorhergehenden Ansprüche, bei der die ersten Büschel von Borsten (82) an der Seite des Prophylaxenapfes (76), der sich am nächsten an dem Griff befindet, sich über eine Strecke erstrecken, die im Wesentlichen gleich dem Durchmesser dieses Prophylaxenapfes (76) ist.

11. Zahnbürste (10) nach einem der vorhergehenden Ansprüche, bei der eine Oberfläche des Kopfes entfernt von der äußeren Oberfläche, die die Reinigungselemente aufweist, aufgeraut ist, um eine Zungenreinigungsfläche (74) aufzuweisen.

12. Zahnbürste (10) nach einem der vorhergehenden Ansprüche, die ein nachgiebiges Material außen um den Kopf herum aufweist, um Stöße gegen das Zahnfleisch zu dämpfen.

13. Zahnbürste (10) nach einem der vorhergehenden Ansprüche, bei der der Griff eine erste äußere Oberfläche auf derselben Seite der Zahnbürste wie die Reinigungselemente aufweist, wobei der Griff und der Kopf eine zweite äußere kontinuierliche Oberfläche auf der gegenüberliegenden Seite der Zahnbürste in Bezug auf die erste äußere Oberfläche aufweisen, wobei zumindest ein Teil der zweiten äußeren Oberfläche eine äußere Schicht (68) aufweist, die aus einem weichen Elastomer geringer Härte hergestellt ist, wobei ein Hauptteil des Griffs und des Kopfes aus einem harten Material (62) hergestellt ist, das zumindest halbstarr ist, wobei ein an dem zumindest einen Teil angeordneter Zwischenauskeidung (70) an dem harten Material (62) anhaftet, wobei die Auskleidung (70) aus einem Elastomer hergestellt ist, das eine größere Härte als die Härte der äußeren Schicht hat, wobei die Auskleidung (70) an dem harten Material (62) anhaftet und die äußere Schicht an der Auskleidung (70) anhaftet.

14. Zahnbürste (10) nach Anspruch 13, bei der der zumindest eine Teil der Zahnbürste Teile des Griffs und des Kopfes enthält.

15. Zahnbürste (10) nach Anspruch 13, bei der die äußere Schicht eine Shore-A-Härte von nicht mehr als 8 aufweist.

16. Zahnbürste (10) nach Anspruch 13, bei der die äußere Schicht eine aufgeraute Oberfläche an dem Kopf hat, um einen Zungenschaber aufzuweisen.

17. Zahnbürste (10) nach Anspruch 13, bei der die Spitze des Griffes entfernt von dem Kopf aus einem nachgiebigen Material hergestellt ist, das im Wesentlichen spitz ist, um einen Zahnstocher oder eine Zahnfleischmassageeinrichtung aufzuweisen.

## Revendications

1. Brosse à dents (10) comprenant une poignée allongée (12), une tête (14) fixée sur une extrémité de ladite poignée (12), des éléments de nettoyage (16) montés sur ladite tête (14) et qui s'étendent vers l'extérieur à partir d'une surface extérieure de ladite tête (14), dans laquelle lesdits éléments de nettoyage comprennent une pluralité de coupelles de prophylaxie alignées et espacées entre elles (76) situées de manière centrale le long d'un axe longitudinal de la tête de la brosse, et une pluralité de premières touffes de brins (82) ;
**caractérisée en ce que** la brosse à dents comprend en outre une pluralité d'éléments de nettoyage allongés en élastomère (78, 80) montés le long de la périphérie de ladite tête, dans laquelle les premières touffes de brins (82) se situent entre les paires desdits éléments de nettoyage allongés (78, 80) le long de la périphérie de ladite tête (14), dans laquelle chaque coupelle de prophylaxie (76) se présente sous la forme de quatre éléments élastomères qui s'étendent vers l'extérieur et qui sont co-arqués de façon à former un cylindre similaire à une coupelle interrompu, dans laquelle la pluralité d'éléments de nettoyage allongés en élastomère (78, 80) comprennent un premier élément de nettoyage allongé élastomère (78) disposé respectivement de chaque côté d'une coupelle de prophylaxie centrale des coupelles de prophylaxie (76), dans laquelle la pluralité d'éléments de nettoyage allongés en élastomère (78, 80) comprend une paire de seconds éléments élastomères allongés (80) disposés vers l'extérieur de chaque coupelle de prophylaxie (76), dans laquelle les premières touffes de brins (82) sont disposées entre les éléments de nettoyage élastomères (78, 80), et la brosse à dents comprend en outre une seconde touffe de brins (77) à l'intérieur de chaque coupelle de prophylaxie (76), dans laquelle les extrémités extérieures des brins des secondes touffes (77) raccourcissent vers l'intérieur à partir du bord circonférence vers le centre des secondes touffes de brins (77), de telle sorte que chaque seconde touffe de brins (77) présente une forme de coupelle.

2. Brosse à dents (10) selon la revendication 1, dans laquelle les premiers éléments de nettoyage élastomères (78) présentent une forme arquée et s'étendent sur une distance en général égale ou légèrement plus grande que le diamètre d'une coupelle de prophylaxie centrale des coupelles de prophylaxie (76).

3. Brosse à dents (10) selon la revendication 1 ou la revendication 2, dans laquelle les premiers éléments de nettoyage élastomères (78) présentent une épaisseur uniforme.

4. Brosse à dents (10) selon l'une quelconque des revendications 1 à 3, dans laquelle les premiers éléments de nettoyage allongés élastomères (78) comprennent les éléments de nettoyage élastomères les plus longs, et sont plus longs que les seconds éléments élastomères allongés (80).

5. Brosse à dents (10) selon l'une quelconque des revendications 1 à 4, dans laquelle les seconds éléments de nettoyage élastomères (80) présentent une forme qui s'amincit à partir de sa distance la plus faible au périmètre de la tête, vers la ligne centrale longitudinale de la tête.

6. Brosse à dents (10) selon l'une quelconque des revendications 1 à 5, dans laquelle les coupelles de prophylaxie (76) s'étendent sur une distance plus courte à partir de la tête que les seconds éléments de nettoyage élastomères (80).

7. Brosse à dents (10) selon l'une quelconque des revendications 1 à 6, dans laquelle les premières touffes de brins (82) présentent une longueur qui se situe entre les longueurs des premiers et seconds éléments de nettoyage élastomères (78, 80).

8. Brosse à dents (10) selon l'une quelconque des revendications 1 à 7, dans laquelle les secondes touffes de brins (77) à l'intérieur des coupelles de prophylaxie (76), s'étendent sur une distance plus courte que les coupelles de prophylaxie (76).

9. Brosse à dents (10) selon l'une quelconque des revendications précédentes, dans laquelle les premières touffes de brins (82) qui se situent le long des coupelles de prophylaxie les plus éloignées (76), s'étendent sur une distance en général égale au diamètre des coupelles de prophylaxie (76).

10. Brosse à dents (10) selon l'une quelconque des revendications précédentes, dans laquelle les premières touffes de brins (82) qui se situent le long de la coupelle de prophylaxie (76) qui est la plus proche de la poignée, s'étendent sur une distance en général égale au diamètre de cette coupelle de prophylaxie (76).

11. Brosse à dents (10) selon l'une quelconque des revendications précédentes, dans laquelle une surface de ladite tête éloignée de ladite surface extérieure qui présente lesdits éléments de nettoyage, est rendue rugueuse de façon à comprendre une surface de nettoyage de la langue (74).

12. Brosse à dents (10) selon l'une quelconque des revendications précédentes, comprenant un matériau pouvant fléchir de manière périphérique autour de ladite tête de façon à atténuer un impact sur les gencives.

13. Brosse à dents (10) selon l'une quelconque des revendications précédentes, dans laquelle ladite poignée présente une première surface extérieure qui se situe du même côté de ladite brosse à dents que lesdits éléments de nettoyage, ladite poignée et ladite tête présentant une seconde surface continue extérieure qui se situe du côté opposé de ladite brosse à dents par rapport à ladite première surface extérieure, une partie au moins de ladite seconde surface extérieure présentant une couche extérieure (68) réalisée dans un élastomère souple qui présente une faible dureté, une partie principale de ladite poignée et de ladite tête étant réalisée dans un matériau dur (62) qui est au moins semi-rigide, un revêtement intermédiaire (70) étant disposé au niveau de ladite ou desdites parties qui adhèrent audit matériau dur (62), ledit revêtement (70) étant réalisé dans un élastomère qui présente une dureté plus élevée que la dureté de ladite couche extérieure, ledit revêtement (70) adhérant audit matériau dur (62), et ladite couche extérieure adhérant audit revêtement (70).

14. Brosse à dents (10) selon la revendication 13, dans laquelle ladite ou lesdites parties de ladite brosse à dents comprennent des parties de ladite poignée et de ladite tête.

15. Brosse à dents (10) selon la revendication 13, dans laquelle ladite couche extérieure présente une dureté Shore A qui n'est pas supérieure à 8.

16. Brosse à dents (10) selon la revendication 13, dans laquelle ladite couche extérieure présente une surface rugueuse au niveau de ladite tête de façon à comprendre un dispositif destiné à racler la langue.

17. Brosse à dents (10) selon la revendication 13, dans laquelle le bout de ladite poignée éloignée de ladite tête, est réalisé dans un matériau pouvant fléchir qui est en général taillé en pointe de façon à comprendre un cure-dent ou un dispositif de massage de gencive.
